**Europäisches Patentamt**

**European Patent Office**

**Office européen des brevets**

(19)

(11) Veröffentlichungsnummer: **0 004 601**
**A1**

(12) # EUROPÄISCHE PATENTANMELDUNG

(21) Anmeldenummer: **79100866.7**

(22) Anmeldetag: **22.03.79**

(51) Int. Cl.²: **C 08 F 6/00**
**C 08 F 10/00**

(30) Priorität: **05.04.78 DE 2814572**

(43) Veröffentlichungstag der Anmeldung:
**17.10.79 Patentblatt 79/21**

(84) Benannte Vertragsstaaten:
**BE DE FR GB**

(71) Anmelder: **BASF Aktiengesellschaft**
**Carl-Bosch-Strasse 38**
**D-6700 Ludwigshafen(DE)**

(72) Erfinder: **Zeitler, Gerhard, Dr.**
**Lessingstrasse 11**
**D-6711 Hessheim(DE)**

(72) Erfinder: **Paatz, Rudolf, Dr.**
**Auf der Au 11**
**D-6715 Lambsheim(DE)**

(72) Erfinder: **Gierth, Volker, Dr.**
**Alwin-Mittasch-Platz 1**
**D-6700 Ludwigshafen(DE)**

(72) Erfinder: **Moorwessel, Dieter, Dr.**
**Dilsberger Strasse 3-5**
**D-6800 Mannheim 51(DE)**

(72) Erfinder: **Schoene, Werner, Dr.**
**Torwiesenstrasse 19**
**D-6800 Mannheim 1(DE)**

(54) **Verfahren zum Entfernen geruchsintensiver Bestandteile aus feinteiligen Olefinpolymerisaten.**

(57) Die Erfindung betrifft ein Verfahren zum Entfernen geruchsintensiver Bestandteile aus Polyolefinpulvern durch Einwirken von Wasserdampf unter Luftausschluß, wobei die Dauer der Wasserdampfbehandlung 0,5 bis 15, bevorzugt 1 bis 10 Stunden, die Menge des Wasserdampfs 5 bis 50, bevorzugt 5 bis 30 Gewichtsprozent, bezogen auf das Gewicht des Polyolefins, und der Druck des Wasserdampfs 0,1 bis 10, bevorzugt 1 bar, beträgt. Nach diesem Verfahren können die geruchsvermittelnden Substanzen aus dem Polyolefin restlos entfernt werden, ohne daß die abgetrennten Geruchsstoffe die Umwelt belasten.

EP 0 004 601 A1

net sind. Selbst wenn man mit dem als Inertgas empfohlenen Stickstoff wesentlich längere Zeiten mit den genannten Mengen behandelt, werden keine geruchsfreien Olefinpolymerisate erhalten. Durch sehr große Mengen Stickstoff über längere Zeit können zwar die geruchsintensiven Bestandteile entfernt werden, die Methode ist aber nicht wirtschaftlich, und es ergeben sich Umweltprobleme, da die Abtrennung der Geruchsstoffe aus dem Stickstoff Schwierigkeiten bereitet.

Der Erfindung liegt die Aufgabe zugrunde, ein wirtschaftliches Verfahren zur Entfernung geruchsintensiver Bestandteile aus Olefinpolymerisaten aufzufinden, bei dem die geruchsvermittelnden Substanzen aus dem Polymerisat restlos entfernt werden können, ohne daß die abgetrennten Geruchsstoffe die Umwelt belasten können.

Diese Aufgabe wurde erfindungsgemäß dadurch gelöst, daß man Wasserdampf über eine Zeitdauer von 0,5 bis 15 Stunden in einer Menge von 5 bis 50 Gewichtsprozent, bezogen auf das Gewicht des Polymerisats, bei Drücken von 0,1 bis 10 bar auf das feinteilige Olefinpolymerisat unter Luftausschluß einwirken läßt.

Nach bevorzugter Verfahrensweise beträgt die Dauer der Einwirkung 1 bis 10 Stunden.

Bevorzugt ist auch ein Verfahren, bei dem die Wasserdampfmenge 5 bis 30 Gewichtsprozent beträgt.

Das Verfahren wird bevorzugt bei einem Wasserdampfdruck von 1 bar ausgeführt.

BASF Aktiengesellschaft                    O.Z. 0050/033106

Verfahren zum Entfernen geruchsintensiver Bestandteile
aus feinteiligen Olefinpolymerisaten

Gegenstand der Erfindung ist ein Verfahren zum Entfernen geruchsintensiver Bestandteile aus feinteiligen Olefinpolymerisaten mit Teilchendurchmessern von 100 bis 5 000 µm durch Einwirken eines Wasserdampfstromes bei Temperaturen von 100°C bis mindestens 5°C unter dem Kristallitschmelzpunkt des Olefinpolymerisats.

Bei derartigen Verfahren sind Maßnahmen erforderlich, die einerseits ein Zusammenbacken der feinteiligen Olefinpolymerisate vermeiden, andererseits aber Substanzen, die dem festen Polymerisat und deren Endprodukte wie Folien einen unangenehmen Geruch vermitteln, aus dem Polymerisat entfernen.

Zur Erfüllung dieser Erfordernisse kann nach dem in der GB-PS 1 272 778 beschriebenen Verfahren feinteiliges Olefinpolymerisat mit einem Inertgas bei erhöhten Temperaturen behandelt werden. Die angeführten Behandlungszeiten und Behandlungsmengen erlauben aber nur das Entfernen von sehr leicht flüchtigen Bestandteilen. Nach bekanntem Verfahren können keine Olefinpolymerisate erhalten werden, die für Verpackungszwecke auf dem Lebensmittelsektor geeig-

Fre/Fe

Unter geruchsintensiven Bestandteilen werden Substanzen verstanden, die dem Olefinpolymerisat einen unangenehmen Geruch verleihen. Bei diesen Substanzen handelt es sich meist um organische Stoffe mit Siedepunkten von 150 bis 250°C bei Normaldruck, besonders solche, die 8 bis 10 Kohlenstoffatome und Sauerstoff in der Größenordnung von 12 Gewichtsprozent enthalten. Insbesondere handelt es sich bei diesen Substanzen um Alkohole und Ketone. Die geruchsintensiven Produkte sind im Olefinpolymerisat gelöst.

Das Verfahren eignet sich für Olefinpolymerisate, die nach Verfahren in Abwesenheit von Lösungs- oder Dispergiermitteln hergestellt wurden. Unter Olefinpolymerisaten versteht man die einschlägig bekannten Homo- und Copolymerisate des Äthylens, die Homo- und Copolymerisate des Propylens sowie die Copolymerisate des Äthylens und Propylens und die Copolymerisate des Äthylens oder Propylens mit Buten-1. Die Olefinpolymerisate sind charakterisiert durch einen Schmelzindex zwischen 0,01 und 30 g/10 min., bevorzugt 0,01 und 10 g/10 min., gemessen nach ASTM D 1238-65T bei einer Temperatur von 190°C und einem Auflagegewicht von 2,16 kg bei Äthylenpolymerisaten bzw. 230°C und 2,16 kg bei Propylenpolymerisaten. Die Dichten der Olefinpolymerisate, gemessen nach DIN 53 479, liegen zwischen 0,820 und 0,965 g/cm$^3$.

Bevorzugte Olefinpolymerisate sind Niederdruckpolyäthylene, Hochdruckpolyäthylen, Polypropylene und Äthylen-Propylen-Copolymerisate.

Die Olefinpolymerisatteilchen, die behandelt werden sollen, haben Teilchendurchmesser von 100 bis 5 000, bevorzugt 100 bis 3 000 µm. Die Teilchen können als Pulver oder Granulate vorliegen.

Die Einwirkung des Wasserdampfstroms erfolgt in einschlägig bekannten Apparaturen wie Mischern aller Art, vorzugsweise in sogenannten Wurf- oder Schubmischern oder in Apparaten, wie sie zum Trocknen von Feststoffen eingesetzt werden, z.B. Schachttrocknern. Die feinteiligen Olefinpolymerisate werden unter schwacher Bewegung mit Wasserdampf unter Luftausschluß behandelt. Wasserdampf und Geruchsstoff gehen als Abgas ab und werden in bekannter Weise durch Abkühlen kondensiert. Die Geruchsstoffe sind nur wenig in Wasser gelöst, können von diesem abgetrennt und einer gezielten Vernichtung zugeführt werden.

Die Temperatur bei der Behandlung der feinteiligen Olefinpolymerisate beträgt mindestens 100°C und maximal 5°C, vorzugsweise 5 bis 40°C unter dem Kristallitschmelzpunkt des jeweiligen Olefinpolymerisats. Unter Kristallschmelzpunkt wird dabei diejenige Temperatur verstanden, bei der der kristalline Anteil des Olefinpolymerisats anfängt zu schmelzen. Der Kristallitschmelzpunkt eines Niederdruckpolyäthylens (Dichte von 0,96 g/cm$^3$) beträgt beispielsweise 128°C, eines Hochdruckpolyäthylens (Dichte von 0,92 g/cm$^3$) 110°C und eines Polypropylens der Dichte 0,89 g/cm$^3$ 160°C. Die untere Behandlungstemperatur ist also durch den Kondensationspunkt des Wasserdampfes, und die obere Temperaturgrenze durch den Kristallitschmelzpunkt des Olefinpolymerisats vorgegeben. Eine Kondensation des Wasserdampfes und ein Schmelzen des Polymerisats soll vermieden werden.

Nach erfindungsgemäßem Verfahren soll die Dauer der Wasserdampfeinwirkung auf die feinteiligen Olefinpolymerisate 0,5 bis 15, bevorzugt 1 bis 10 Stunden betragen. Bei sehr feinteiligen Polymerisaten und relativ hohen Temperaturen wird die Wasserdampfbehandlung in relativ kurzen Zeiten mit Erfolg möglich sein.

Die Wasserdampfmenge bei der Behandlung der feinteiligen Olefinpolymerisate soll 5 bis 50, bevorzugt 5 bis 30 Gewichtsprozent, bezogen auf das Gewicht des Olefinpolymerisats, betragen. Die Dampfmenge wird mit durch die Teilchengröße und die Temperatur bestimmt.

Die Behandlung der feinteiligen Olefinpolymerisate mit Wasserdampf kann bei einem Wasserdampfdruck von 0,1 bis 10 bar erfolgen. Die Behandlung wird aber vorzugsweise unter Normaldruck von 1 bar durchgeführt. Die Behandlung der feinteiligen Olefinpolymerisate mit Wasserdampf muß unter Ausschluß von Luft erfolgen.

Die mit der Erfindung erzielten Vorteile bestehen insbesondere darin, daß nach wirtschaftlichem und umweltfreundlichem Verfahren gereinigte und geruchsfreie Olefinpolymerisate erhalten werden können, die zu Folien oder Hohlkörpern verarbeitet werden, welche sich für die Verpackung von Lebensmitteln eignen.

## Beispiel 1

In einem Schubmischer werden 300 kg Polypropylen der Dichte 0,89 $g/cm^3$ und des Schmelzindex 1,2 g/10 min. in Pulverform mit Teilchengrößen von 100 bis 3 000 µm unter Rühren bei 120°C mit 20 kg Wasserdampf pro Stunde unter Normaldruck 3 Stunden unter Luftausschluß behandelt. Das erhaltene Polypropylen ist geruchfrei und kann zu Flaschen für die Lebensmittelverpackung verarbeitet werden. Die Aufarbeitung des Kondensats erfolgt durch Trennen einer 5 %igen Flüssigkeit von der Wasserphase. Es werden 32 g Öle erhalten, die verbrannt werden. Im Wasser sind weniger als 0,1 % organische Verbindungen gelöst.

## Vergleichsversuch

Führt man den Versuch unter gleichen Bedingungen mit demselben feinteiligen Polypropylen durch und verwendet anstelle des Wasserdampfes die gleiche Menge Stickstoff, so wird keine Verbesserung des Geruches erzielt. Erst bei einer Stickstoffmenge von 2 kg pro kg feinteiliges Polypropylen wird in etwa gleicher Zeit eine Geruchsverminderung erhalten. Die Geruchsstoffe gehen zusammen mit dem Stickstoff in die Abgasleitung.

## Beispiel 2

100 kg Polyäthylen mit einer Dichte von 0,92 g/cm$^3$ und einem Schmelzindex von 4,3/10 min. in Granulatform mit einem Teilchendurchmesser von 3 000 bis 4 000 $\mu$m werden in einem Schachttrockner bei 102°C mit 7 kg Wasserdampf unter Normaldruck (1 bar) 4 Stunden lang unter Luftausschluß behandelt. Das Granulat zeigte auch nach längerer Lagerung unter Luftausschluß keinen Geruch. Das Produkt kann zu Folien verarbeitet werden, die sich für die Lebensmittelverpackung eignen.

BASF Aktiengesellschaft · -1- O.Z. 0050/033105

Patentansprüche

1. Verfahren zum Entfernen geruchsintensiver Bestandteile aus feinteiligen Olefinpolymerisaten mit Teilchendurchmessern von 100 bis 5 000 µm durch Einwirken eines Wasserdampfstroms bei Temperaturen von 100°C bis mindestens 5°C unter dem Kristallitschmelzpunkt des Olefinpolymerisats, dadurch gekennzeichnet, daß man den Wasserdampf über eine Zeitdauer von 0,5 bis 15 Stunden in einer Menge von 5 bis 50 Gewichtsprozent, bezogen auf das Gewicht des Polymerisats, bei Drücken von 0,1 bis 10 bar auf das feinteilige Olefinpolymerisat unter Luftausschluß einwirken läßt.

2. Verfahren nach Anspruch 1, dadurch gekennzeichnet, daß die Dauer der Einwirkung 1 bis 10 Stunden beträgt.

3. Verfahren nach Anspruch 1, dadurch gekennzeichnet, daß die Wasserdampfmenge 5 bis 30 Gewichtsprozent beträgt.

4. Verfahren nach Anspruch 1, dadurch gekennzeichnet, daß der Wasserdampfdruck 1 bar beträgt.

## Europäisches Patentamt

**EUROPÄISCHER RECHERCHENBERICHT**

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | C 08 F   6/00 10/00 |
| X | CA - A - 836 977 (DU PONT OF CANADA) <br><br> * Ansprüche 1-3,6,8; Seite 2, Zeile 27; Seite 3, Zeilen 16-18, 24-34; Beispiele 1,2; Tabelle 1,2, 1. und letzte Spalte * <br><br> -- | 1-4 | |
| X | FR - A - 2 257 323 (DU PONT DE NEMOURS) <br><br> * Ansprüche 1-4,5; Seite 11, Zeilen 23-28; Beispiel 1 * <br><br> -- | 1-4 | **RECHERCHIERTE SACHGEBIETE (Int. Cl.²)** <br><br> C 08 F   6/00 <br> 6/10 <br> 6/16 <br> 6/24 <br> 6/28 <br> 10/00 <br> C 08 L 23/00 |
| | FR - A - 2 214 706 (DU PONT OF CANADA) <br><br> * Ansprüche 1,2,7,8; Seite 7, Zeilen 8-11; Seite 8, Zeilen 22-26; Seite 6, Zeilen 10-19,30-35 * <br><br> -- | 1-4 | |
| DX | GB - A - 1 272 778 (BASF) <br><br> * Ansprüche 1,4; Seite 1, Zeilen 77-81; Seite 2, Zeilen 45,79, 100 * <br><br> -- | 1 | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |
| | US - A - 3 227 703 (P.S. COFENHAVER et al.) <br><br> * Ansprüche 1,2; Spalte 2, Zeilen 60-68; Spalte 4, Zeilen 47-63 * <br><br> ---- | 1,2,4 | |

Der vorliegende Recherchenbericht wurde für alle Patentansprüche erstellt.

| Recherchenort | Abschlußdatum der Recherche | Prüfer |
|---|---|---|
| Den Haag | 05-07-1979 | BOLETTI |

EPA form 1503.1   06.78